# EUROPÄISCHE PATENTSCHRIFT

(11) **EP 1 870 575 B1**
(45) Veröffentlichungstag und Bekanntmachung des Hinweises auf die Patenterteilung: **08.05.2019**
(21) Anmeldenummer: 07009891.8
(22) Anmeldetag: 18.05.2007
(51) Int. Cl.: F01P 3/22, F02G 5/00, F02B 67/06

(54) **Aufgeladene Brennkraftmaschine mit einer Expandereinheit in einem Wärmerückgewinnungskreislauf**
Charged combustion engine with an expander unit in a heat recovery loop
Moteur à combustion interne chargé doté d'une unité d'expansion dans un circuit de récupération de chaleur

(30) Priorität: 23.06.2006 DE 102006028868
(43) Veröffentlichungstag der Anmeldung: 26.12.2007
(73) Patentinhaber: MAN Truck & Bus AG, 80995 München (DE)
(72) Erfinder: Möller, Heribert, 91623 Sachsen (DE); Raab, Gottfried, 4320 Perg (AT)
(74) Vertreter: Liebl, Thomas

(56) Entgegenhaltungen:
- DE-A1- 2 414 147
- FR-A1- 2 501 782
- JP-A- 2001 182 504
- JP-A- 2001 254 664
- SU-A1- 1 366 672
- US-A- 4 235 077
- US-A- 4 901 531

## Beschreibung

### Technisches Gebiet:

Die Erfindung betrifft eine aufgeladene Brennkraftmaschine eines Kraftfahrzeugs, die einen Kühlkreislauf aufweist, in dem ein Arbeitsmittel umgewälzt wird, das zumindest teilweise in einen dampf- oder gasförmigen Aggregatzustand überführt wird. Hierbei ist wenigstens eine mit einer Abtriebswelle der Brennkraftmaschine in Wirkverbindung stehende Expandereinheit vorgesehen, in der das zumindest teilweise dampf- oder gasförmige Arbeitsmittel entspannt und die kinetische Energie des Dampfes bzw. des Gases in Bewegungsenergie umgewandelt wird.

### Stand der Technik:

Bei der Entwicklung bzw. Weiterentwicklung von Brennkraftmaschinen liegt in den letzten Jahren ein Hauptaugenmerk der Arbeiten einerseits auf einer Schadstoffminimierung und andererseits auf einer Effizienzsteigerung der Aggregate. In diesem Zusammenhang besteht eine Möglichkeit, die Effizienz moderner Brennkraftmaschinen zu steigern, darin, die im Bereich der jeweiligen Brennkraftmaschine anfallende Wärme optimal zu nutzen. Durch Vorsehen entsprechender Maßnahmen ist es möglich, sowohl die Baugröße der benötigten Kühlanlage zu begrenzen als auch die ansonsten lediglich an die Umgebung abgegebene Verlustwärme für weitere Anwendungen im Bereich des Kraftfahrzeugs nutzbar zu machen. Bislang wird die bei Kraftfahrzeugen im Bereich des Verbrennungsmotors anfallende Wärme vornehmlich für die Beheizung des Fahrzeuginnenraums genutzt. Problematisch hierbei ist allerdings, dass die von den Fahrzeuginsassen benötigte Wärme variiert, vor allem aber nur in Ausnahmefällen mit der jeweils vom Verbrennungsmotor abgegebenen Leistung korrespondiert. Darüber hinaus besteht insbesondere in Sommermonaten kein Wärme- sondern vielmehr ein Kältebedarf, wobei die Kühlung des Fahrzeuginnenraums mit Hilfe entsprechender Kälteanlagen realisiert wird.

Um die Motorkühlung zu verbessern, sind in den letzten Jahren Verbrennungsmotoren, insbesondere Fahrzeugmotoren, derart weiterentwickelt worden, dass die entsprechenden Systeme eine Nutzung der im Bereich des Verbrennungsmotors anfallende Wärme auf möglichst effektive Weise ermöglichen. In diesem Zusammenhang besteht einerseits die Möglichkeit, die anfallende Wärme für andere im Kraftfahrzeug vorgesehene Wärmesenken zu verwenden oder die Wärmeenergie mit Hilfe entsprechender Kreisprozesse in mechanische Energie, insbesondere Bewegungsenergie umzuwandeln.

Aus der DE 197 45 758 A1 ist eine Kühlanlage für Verbrennungsmotoren von Kraftfahrzeugen bekannt, die unter Einsatz verhältnismäßig kleiner Wärmeübertragerflächen eine optimale Kühlung des Verbrennungsmotors ermöglichen soll. Das in dieser Druckschrift beschriebene System weist eine Verdampfungskühlung auf, bei der das verwendete Kühlwasser, vorzugsweise ein Wasser-Frostschutz-Gemisch während des Betriebs des Kühlsystemes einen Phasenübergang flüssig - dampfförmig - flüssig durchläuft. Hierbei wird der Effekt ausgenutzt, dass die Wärmeübergangszahlen sowohl von der warmen Wand an die siedende Flüssigkeit als auch vom Dampf an die kalte Wand höher sind als bei der Konvektion zwischen Flüssigkeit bzw. Gas und einer Wand. Der Einsatz der beschriebenen Verdampfungskühlung soll somit letztendlich sicherstellen, dass Wärmeübertrager mit gegenüber herkömmlichen Konvektionswärmeübertragern verhältnismäßig kleinen Wärmeübertragerflächen eingesetzt werden können. Dies führt zu einer erheblichen Minimierung des für die Kühlanlange, insbesondere den Wärmeübertrager, benötigten Bauraums.

Neben einer Verdampfungskühlung, bei der ein Stoff, vornehmlich Wasser, dem lediglich ein Zusatz zur Verhinderung des Einfrierens beigemischt ist, im Kühlmittelkreislauf verwendet wird, ist beispielsweise aus der JP 09072255 A ein Kühlsystem für einen Verbrennungsmotor bekannt, das über zwei Kühlkreisläufe verfügt, wobei in einem der beiden Kühlkreisläufe ein Zweistoffgemisch als Arbeitsmittel eingesetzt wird. Hierbei wird zunächst die im Bereich des Verbrennungsmotors anfallende Überschusswärme über einen ersten Kühlkreislauf abgeführt und mit Hilfe eines Wärmeübertragers an das im zweiten Kühlkreislauf geförderte Arbeitsmittel übertragen. Bei dem im zweiten Kühlkreislauf befindlichen, als Zweistoffgemisch ausgeführten Arbeitsmittel handelt es sich um ein Wasser-Ammoniak-Gemisch. Dieses Gemisch zeichnet sich vor allem dadurch aus, dass die Gemischkomponenten bei gleichen Druckverhältnissen unterschiedliche Verdampfungstemperaturen aufweisen. Ein derartiges System bietet vor allem den Vorteil, dass bereits auf einem niedrigem Temperaturniveau Dampf erzeugt wird, der einer anschließenden Nutzung zur Verfügung steht.

Als wesentliche Komponenten sind bei der beschriebenen technischen Lösung im zweiten Kühlkreislauf ein Generator, in dem das Ammoniak des Wasser-Ammoniak-Gemischs verdampft, ein Phasentrenner, in dem die Flüssigkeits- von der Dampfphase getrennt wird, ein Kondensator, in dem das Ammoniak wieder verflüssigt wird, sowie ein Drosselventil mit nachgeschaltetem Verdampfer und schließlich ein Absorber, in dem das gasförmige Ammoniak im Wasser unter Wärmeabgabe gelöst wird, vorgesehen. Bei dem beschriebenen Kühlsystem wird die aus dem Bereich des Verbrennungsmotors abzuführende Wärme im Bereich des Generators an das Wasser-Ammoniak-Gemisch übertragen und schließlich vor allem mit Hilfe des Kondensators zur Treibstoffvorerwärmung genutzt. Auch in diesem Fall werden aufgrund des stattfindenden Phasenübergangs vergleichsweise kleine Wärmeübertragerflächen verwendet.

Weiterhin ist aus "BMW: Power aus dem Abgas; in Auto Motor Sport vom 08.12.2005 (siehe auch Internetseite http://www.auto-motor-sport.de/d/98231)" ein Kühlsystem eines Kraftfahrzeugs bekannt, bei dem dem Abgas und dem Kühlwasser Wärmeenergie entzogen wird, die anschließend in einer Expandereinheit in kinetische Energie umgewandelt wird. Die verwendete Expandereinheit verfügt über zwei Dampf-Axialkolbenmotoren, die über einen Riementrieb mit der Abtriebswelle des eigentlichen Verbrennungsmotors gekoppelt sind. Auch dieses System zur Dampferzeugung verfügt über zwei separate Kühlkreisläufe, in denen einerseits Wasser auf über 500°C und andererseits Ethanol auf bis zu 105°C aufgeheizt wird. Beide Medien liegen bei den vorgenannten Temperaturen in den entsprechenden Kühlkreisläufen in Form von Heißdampf vor, der jeweils einem der zwei Dampf-Axialkolbenmotoren zugeführt wird. Die im Dampf gespeicherte kinetische Energie wird auf diese Weise in Bewegungsenergie umgewandelt, die über den Riementrieb auf die Abtriebswelle des Verbrennungsmotors übertragen wird, um so eine Wirkungsgradsteigerung des Verbrennungsmotors zu erreichen.

Aus der US 4 235 077 A ist eine Antriebsmaschine bekannt, die einen Verbrennungsmaschinenbereich und einen Dampfmaschinenbereich aufweist. Die im Verbrennungsmaschinenbereich erzeugte Hitze wird auf ein flüssiges Kühlmittel übertragen, das verdampft und dem Dampfmaschinenbereich zugeführt wird. Im Dampfmaschinenbereich ist eine ein- oder mehrzylindrige Expansionseinrichtung vorgesehen, in der der Dampf entspannt werden kann. Der Dampfmaschinenbereich baut in Längsrichtung gesehen an der einen Stirnseite der Antriebsmaschine an, während auf der gegenüberliegenden Stirnseite ein Lüfterrad der Brennkraftmaschine angeordnet ist.

Die JP 2001-182 504 A beschreibt lediglich ganz allgemein den Aufbau eines Rankine-Zyklus-Systems in Verbindung mit einer Brennkraftmaschine, bei der gefordert wird, den Verdampfer und den Expander unmittelbar benachbart zueinander anzuordnen bzw. diese Baueinheit aus Verdampfer und Expander direkt an der Verbrennungsmaschine anzuordnen, um einen verbesserten Wärmeübergang von der Verbrennungsmaschine her zu erhalten.

Ausgehend von dem bekannten Stand der Technik, bei dem in einem Kühlkreislauf eines Verbrennungsmotors zunächst Dampf erzeugt und dann anschließend unter Einsatz einer Expandereinheit zur Erzeugung von Bewegungsenergie wieder entspannt wird, liegt der Erfindung die Aufgabe zugrunde, eine technische Lösung anzugeben, bei der die Energiewandlung im Bereich des Verbrennungsmotors unter Einsatz wirtschaftlich sinnvoller Komponenten, die lediglich einen geringen Bauraum benötigen, realisiert wird. Die anzugebende Lösung soll hierbei insbesondere über einen verhältnismäßig einfachen konstruktiven Aufbau verfügen und ohne erheblichen Aufwand in die Peripherie einer Brennkraftmaschine integrierbar sein. Weiterhin ist darauf zu achten, dass der wesentliche Aufbau einer Brennkraftmaschine sowie die Anordnung der Anbauaggregate aufgrund des Einsatzes einer zusätzlichen Expandereinheit nicht grundlegend verändert werden muss.

Eine aufgeladene Brennkraftmaschine, mit der die vorstehend genannte Aufgabe gelöst wird, ist Gegenstand des Patentanspruchs 1. Vorteilhafte Ausführungsformen der Erfindung sind Gegenstand der Unteransprüche und werden in der Beschreibung unter Bezugnahme auf die Figuren näher erläutert.

Erfindungsgemäß wird eine aufgeladene Brennkraftmaschine eines Kraftfahrzeugs, die einen Kühlkreislauf aufweist, in dem ein Arbeitsmittel umgewälzt wird, das zumindest teilweise in einen dampf- oder gasförmigen Aggregatzustand überführt wird, wobei wenigstens eine mit einer Abtriebswelle der Brennkraftmaschine über einen Triebstrang in Wirkverbindung stehende Expandereinheit vorgesehen ist, in der durch eine Umwandlung von in dem zumindest teilweise dampf- oder gasförmigen Arbeitsmittel enthaltener Energie eine Abtriebswelle der Expandereinheit bewegbar ist, derart weitergebildet, dass die Expandereinheit eine als Sternmotor ausgeführte Zweitaktkolbenmaschine ist, die mittelbar oder unmittelbar über den Triebstrang mit der Abtriebswelle der Brennkraftmaschine in Wirkverbindung steht, wobei der Sternmotor in einem zwischen der Brennkraftmaschine und einem Lüfterrad befindlichen Bereich angeordnet ist, und wobei eine Lüfterwelle innerhalb eines Kurbelgehäuses des Sternmotors angeordnet ist.

In diesem Zusammenhang ist es denkbar, die Zweitaktkolbenmaschine entweder innerhalb eines die Brennkraftmaschine umgebenden Gehäuses oder außerhalb des Brennkraftmaschinengehäuses anzuordnen. In einer ganz speziellen Weiterbildung der Erfindung ist die Zweitaktkolbenmaschine innerhalb des Gehäuses der Brennkraftmaschine im Bereich der Ölwanne angeordnet. Auf diese Weise ist es möglich, die Zweitaktkolbenmaschine besonders Platz sparend im Bereich der Brennkraftmaschine zu befestigen.

Aufgrund der erfindungsgemäßen Ausführung der Expandereinheit als Sternmotor ist es möglich, eine aufgeladene Brennkraftmaschine bereitzustellen, bei der die Umwandlung von in einem Arbeitsmittel enthaltener kinetischer Energie in zusätzliche Bewegungsenergie auf engstem Raum ausführbar ist. Hierbei zeichnet sich der Sternmotor vor allem durch seine radiale Bauweise, insbesondere durch die Anordnung der wenigstens zwei Zylinder in einer Ebene, die vorteilhafterweise senkrecht zur Abtriebswelle der aufgeladenen Brennkraftmaschine angeordnet ist, aus. Die Dampferzeugungseinheit sowie der Sternmotor werden vorzugsweise derart ausgelegt, dass eine maximale Leistung an der Abtriebswelle des Sternmotors von bis zu 40 kW bei einem Fernverkehrsnutzfahrzeugmotor erzielbar ist. In diesem Zusammenhang eignet sich die Verwendung eines Sternmotors besonders, dessen Zylinder einen Innendurchmesser von 55 bis 65 mm, vorzugsweise von 60 mm aufweisen.

Bei der erfindungsgemäß vorgeschlagenen technischen Lösung wird zumindest in einem Kühlkreislauf, über den Wärme aus der aufgeladenen Brennkraftmaschine, vorzugsweise aus dem Motorblock, abgeführt wird, wenigstens zeitweise Dampf erzeugt, der dem Sternmotor zugeführt, dort in den einzelnen Zylinder die Kolben in Bewegung versetzt und auf diese Weise auch eine Abtriebswelle des Sternmotors in Rotation versetzt. Die Rotationsenergie der Abtriebswelle des Stermotors wird wiederum auf die Abtriebswelle der aufgeladenen Brennkraftmaschine übertragen. In diesem Zusammenhang ist es denkbar, die Abtriebswellen des Sternmotors und der Brennkraftmaschine entweder direkt miteinander zu koppeln, bspw. indem der Sternmotor direkt auf der Abtriebswelle der Brennkraftmaschine angeordnet wird, oder aber eine mittelbare Verbindung zwischen den Abtriebswellen, etwa über einen Riemen- oder Zahnradantrieb oder sogar über ein Getriebe vorzusehen.

Gemäß der vorliegenden Erfindung ist der Sternmotor in einem zwischen der Brennkraftmaschine und dem Lüfterrad befindlichen Bereich vorgesehen. Hierbei wird berücksichtigt, dass das Lüfterrad üblicherweise, mit der Abtriebswelle, insbesondere der Kurbelwelle der Brennkraftmaschine in Wirkverbindung steht bzw. direkt auf dieser angeordnet ist. Mit Hilfe eines derart angeordneten Lüfterrades wird in der Regel ein Luft-/Wasserwärmetauscher und/oder die Außenwand der Brennkraftmaschine mit Kühlluft beaufschlagt. Vorteilhafterweise ist der Sternmotor zwischen einem Gehäuse der Brennkraftmaschine, vornehmlich dem Kurbelgehäuse, und dem Lüfterrad angeordnet, so dass eine ganz besonders Platz sparende Anordnung einer zusätzlichen Expandereinheit möglich ist.

Eine spezielle Gestaltung der erfindungsgemäßen Brennkraftmaschine sieht vor, dass die Abtriebswelle der Brennkraftmaschine eine Kurbelwelle ist, mit der der Sternmotor in Wirkverbindung steht. Vorteilhafterweise ist der Sternmotor auf der Abtriebswelle befestigt, auf der auch ein Lüfter der Brennkraftmaschine vorgesehen ist. Bei einer derartigen Ausführungsform sind somit der Sternmotor und ein Lüfterrad auf einer Abtriebswelle der Brennkraftmaschine, insbesondere der Kurbelwelle befestigt. Hierbei ist es einerseits denkbar, dass der Abtrieb des Sternmotors direkt auf die entsprechende Abtriebswelle der Brennkraftmaschine wirkt oder ein entsprechendes Getriebe, beispielsweise in Form eines Sonnengetriebes, zwischengeschaltet ist.

Eine weitere besondere Ausführungsform einer aufgeladenen Brennkraftmaschine verfügt dagegen über eine separate Abtriebswelle, auf der der Sternmotor befestigt ist, wobei die Abtriebswelle des Sternmotors wiederum über einen Zahnradtrieb mit der Abtriebswelle, insbesondere der Kurbelwelle der Brennkraftmaschine verbunden ist. Eine alternative Ausführungsform sieht ferner vor, dass anstelle des Zahnradtriebs ein Riementrieb, vorzugsweise einen Zahnriementrieb zwischen der Kurbelwelle des Motors und der Abtriebswelle des Sternmotors angeordnet ist. Auch in diesem Fall ist es durchaus möglich, zwischen der Abtriebswelle des Sternmotors und der Kurbelwelle ein Getriebe vorzusehen. Nur der guten Ordnung halber wird darauf hingewiesen, dass es bei den vorbeschriebenen Ausführungsformen der Erfindung unerheblich ist, ob der Sternmotor mit der entsprechenden Wirkverbindung mit der Abtriebswelle des Sternmotors und der Kurbelwelle der Brennkraftmaschine innerhalb des Kurbelgehäuses oder außerhalb des Kurbelgehäuses angeordnet ist. Dennoch bietet eine Anbringung des Sternmotors sowie des Elements zur Herstellung einer Wirkverbindung zwischen Sternmotor und Kurbelwelle der Brennkraftmaschine, außerhalb des Kurbelgehäuses sowohl für die Wartung als auch die Montage einer Antriebseinheit erhebliche Vorteile.

Der Sternmotor verfügt vorzugsweise über wenigstens ein Einlass- sowie ein Auslassventil, die mit Hilfe einer Nocken- oder entsprechenden Schiebeventilsteuerung bedarfsangepasst regelbar sind. Über einen derart ausgeführten Ventilmechanismus wird der in einer Dampferzeugereinheit erzeugte Arbeitsmitteldampf in den Arbeitsraum der Zylinder des Sternmotors eingeleitet, so dass der Kolben schließlich eine Linearbewegung ausführt. Sobald der Kolben den unteren Totpunkt erreicht hat, beginnt das Ausschieben des Dampfes durch das Auslassventil. Im so genannten Antriebsmodus des Sternmotors wiederholen sich die Einleitung des Dampfes, die Bewegung des Kolbens sowie das Ausschieben des entspannten Dampfes durch das Auslassventil in einer zyklischen Abfolge, so dass die Abtriebswelle des Sternmotors in Rotation versetzt wird.

Bei einer speziellen Ausführungsform der Erfindung ist in Ergänzung zum Antriebsmodus vorgesehen, dass der Sternmotor auch in einen Bremsmodus überführbar ist. Für die Gestaltung des Bremsmodus' sind grundsätzlich drei alternative technische Ausführungen denkbar.

In einer ersten Variante des Bremsmodus wird der Dampf im Vergleich zum Antriebsmodus in umgekehrter Reihenfolge durch die Zylinder des Sternmotors geleitet, so dass der Dampf oder das Gas in umgekehrter Richtung die Zylinderräume der einzelnen Zylinder durchströmt. Hierbei werden die im Antriebsmodus als Auslassventile betriebenen Ventile zu Einlassventilen und die im Antriebsmodus als Einlassventile betriebenen Ventile zu Auslassventilen. Die Abtriebswelle des Sternmotors wird auf diese Weise im Vergleich zum Antriebsmodus in umgekehrter Weise in Rotation versetzt.

Eine zweite vorteilhafte technische Variante des Bremsmodus' sieht eine variable Steuerung der Ventile vor, so dass die Einlass- sowie Auslassventile in Abhängigkeit des jeweiligen Betriebsmodus' mit Dampf- oder Gas beaufschlagt werden. In einer ganz speziellen Ausführungsform werden hierbei die Öffnungs- und Schließzeitpunkte bzw. die jeweiligen -zeitspannen in Abhängigkeit des jeweiligen Betriebsmodus geregelt. Mit der zuvor beschriebenen Ventilsteuerung ist es somit möglich, Dampf oder Gas derart in die Zylinderräume des Sternmotors einzubringen, dass der Sternmotor bremsend auf die von einer aufgeladenen Brennkraftmaschine angetriebene Kurbelwelle einwirkt.

In einer dritten Variante eines erfindungsgemäß ausgeführten Sternmotors sind an einer Nockenwelle unterschiedliche Nocken, nämlich Antriebs- und Bremsnocken, die die Ventile mittelbar oder unmittelbar betätigen, vorgesehen. In einer vorteilhaften Ausführungsform stehen hierbei die Nocken über entsprechende Stößel und Kipphebel mit den Ventilen in Wirkverbindung. In diesem Zusammenhang ist es ferner denkbar, dass die zuvor erwähnten Stößel geteilt ausgeführt sind, um auf bevorzugte Weise den Sternmotor im Antriebs- oder Bremsmodus zu betreiben.

Mit einem Sternmotor, der einen, wie zuvor beschrieben ausgeführten Bremsmodus aufweist, ist es auf vorteilhafte Weise möglich, bremsend auf die Kurbelwelle einer aufgeladenen Brennkraftmaschine einzuwirken.

Die Regelung der Dampfzuführung in den Sternmotor, um etwa den Antriebs- und/oder den Bremsmodus zu aktivieren, wird mit Hilfe einer zentralen Regel- und Steuereinheit ausgeführt. Vorzugsweise ist eine derartige Steuer- und Regeleinheit in den zentralen Fahrzeugführungsrechner oder die Brennkraftmaschinen- bzw. Motorsteuereinheit integriert. Eine weitere spezielle Ausführungsform der Erfindung sieht ferner innerhalb des Kühlkreislaufes, in dem ein Arbeitsmittel zumindest teilweise in eine dampf- oder gasförmige Phase überführt wird, entsprechende Sensoren vor, mit denen der Druck, die Temperatur und/oder der Dampf- bzw. Gasgehalt des Arbeitsmittels detektierbar und an die Steuer- und Regeleinheit übertragbar ist.

Eine ganz besondere Gestaltung des erfindungsgemäß an einer aufgeladenen Brennkraftmaschine vorgesehenen Sternmotors sieht einen Betätigungsmechanismus für die Einlass- und Auslassventile vor, der an der Außenseite des Sternmotors angeordnet ist und bei dem verschiedene Schieber aufgrund der Drehung der Abtriebswelle des Sternmotors in eine translatorische Bewegung überführt werden. Diese translatorische Bewegung wird derart initiiert, dass die Einlass- bzw. Auslassventile des Sternmotors bedarfsangepasst geöffnet und geschlossen werden.

Eine weitere vorteilhafte Ausführungsform des Sternmotors sieht vor, dass zumindest drei Zylinder mit den entsprechenden Einlass- und Auslassventilen vorgesehen sind. Hierbei verfügt jeder Zylinder, wie bereits erwähnt, vorzugsweise über ein Einlass- und ein Auslassventil. Selbstverständlich ist es auch möglich, für jeden Zylinder eine höhere Anzahl von Einlass- und/oder Auslassventilen vorzusehen. In diesem Zusammenhang bezieht sich die Bezeichnung Einlass- bzw. Auslassventil auf die Strömungsrichtung des Dampfes oder Gases im Antriebsmodus.

In einer ganz speziellen Gestaltung ist der Sternmotor oder zumindest Komponenten des Sternmotors aus einem temperaturbeständigen Werkstoff hergestellt. In diesem Zusammenhang ist es, insbesondere im Hinblick auf das Gewicht des Sternmotors, denkbar, die Kolben oder auch andere Komponenten, wie etwa Ventile, Stößel, Kipphebel, Pleuel oder sogar die Kurbelwelle des Sternmotors aus einem entsprechend beständigen Kunststoff zu fertigen.

Im Folgenden wird die Erfindung ohne Beschränkung des allgemeinen Erfindungsgedankens unter Bezugnahme auf die Figuren näher erläutert. Es zeigen:
- Fig. 1:: Seitenansicht der Einbausituation einer Brennkraftmaschine mit zusätzlichem Sternmotor, dessen Abtriebswelle mit einer innerhalb des Sternmotorkurbelgehäuses angeordneten Lüfterwelle gekoppelt ist;
- Fig. 2:: Schnittdarstellung eines Sternmotors, dessen Abtriebswelle mit einer innerhalb des Sternmotorkurbelgehäuses angeordneten Lüfterwelle gekoppelt ist;
- Fig. 3:: Seitenansicht der Einbausituation einer Brennkraftmaschine mit zusätzlichem Sternmotor, dessen Abtriebswelle mit einer außerhalb der Lüfterwelle des Sternmotorkurbelgehäuses angeordneten Welle gekoppelt ist, die mit der Verbrennungskraftmaschine in Wirkverbindung steht;
- Fig. 4:: Schnittdarstellung eines Sternmotors, dessen Abtriebswelle mit einer außerhalb des Sternmotorkurbelgehäuses angeordneten Welle gekoppelt ist, die mit der Verbrennungskraftmaschine in Wirkverbindung steht.

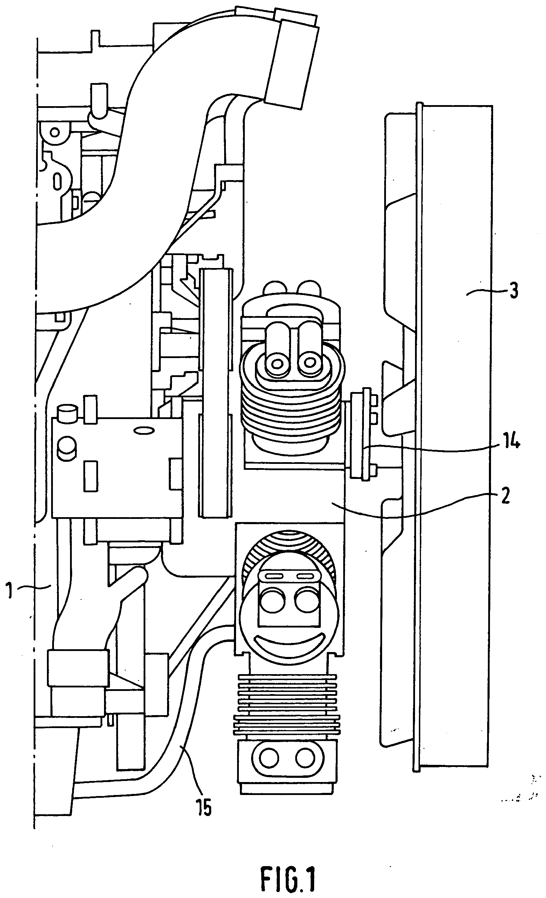

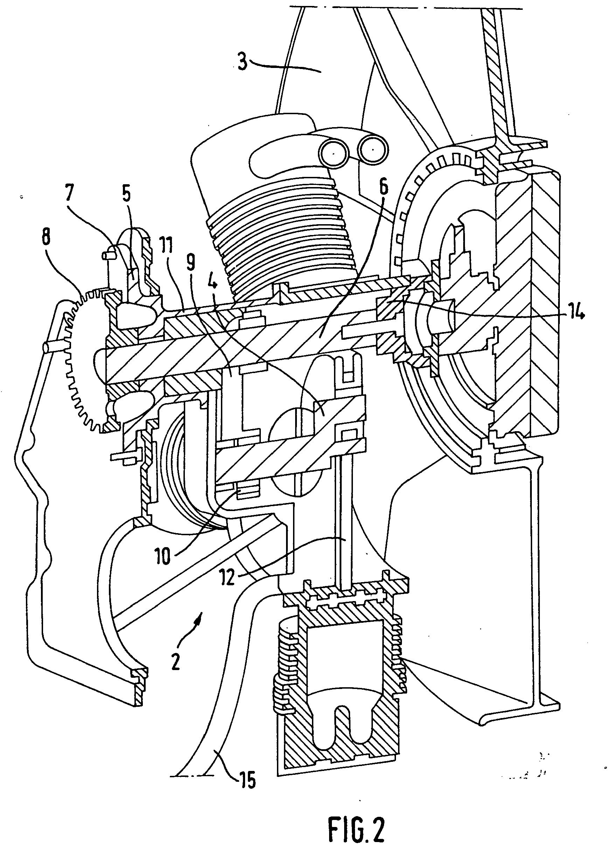

Figur 1 zeigt in einer Seitenansicht die Einbausituation einer Brennkraftmaschine 1 mit einem Sternmotor 2 und einem Lüfterrad 3. Wesentlich an der dargestellten technischen Lösung ist, dass der Sternmotor 2 über einen Triebstrang mit einer Abtriebswelle der Brennkraftmaschine 1, in der Regel also mit der Kurbelwelle der Brennkraftmaschine 1, in Wirkverbindung steht. Der Sternmotor 2 wird während des Betriebs der Brennkraftmaschine mit einem unter Druck stehenden Arbeitsmitteldampf versorgt, der die in den Zylindern angeordneten Kolben sowie die damit verbundene Kurbelwelle 4 des Sternmotors 2 in Bewegung versetzt und auf diese Weise entspannt wird. Wesentlich ist, dass die Kurbelwelle 4 des Sternmotors 2 mit der Lüfterwelle 6 in Wirkverbindung steht. Hierbei ist bei der in den Figuren 1 und 2 dargestellten Ausführungsform einer erfindungsgemäß ausgeführten aufgeladenen Brennkraftmaschine 1 die Lüfterwelle 6 innerhalb des Kurbelgehäuses 11 des Sternmotors angeordnet, so dass der Achsabstand zwischen Lüfterwelle 6 und Kurbelwelle 4 des Sternmotors 2 minimiert wird.

Das Lüfterrad 3 wird über eine Lüfterwelle 6 angetrieben und erzeugt während des Betriebes eines Kraftfahrzeugs einen Kühlluftstrom, mit dem ein Luft-/Wasserwärmetauscher und/oder die Außenwand der Brennkraftmaschine gekühlt wird/werden. Die Lüfterwelle 6 ist über einen Zahnradtrieb (s. Figur 2, Pos. 8) mit der Kurbelwelle (nicht dargestellt) der Brennkraftmaschine 1 verbunden. Die Anbringung des Sternmotors am Kurbelgehäuse der Brennkraftmaschine 1 erfolgt mit Hilfe des Sternmotorflansches 5, wobei der Sternmotorflansch 5 hierfür über entsprechende Ausnehmungen 7 verfügt, in die Schrauben einführbar sind, die schließlich in das Kurbelgehäuse eingeschraubt werden.

Die Figur 2 zeigt eine Schnittdarstellung eines zusätzlich zu einer Brennkraftmaschine 1 vorgesehenen Sternmotors 2. Die Kurbelwelle 4 des Sternmotors 2 ist über die Lüfterwelle 6 mittelbar mit der Kurbelwelle der Brennkraftmaschine verbunden. Hierbei stellt ein Kettentrieb 9 die Wirkverbindung zwischen der Kurbelwelle 4 des Sternmotors 2 und der Lüfterwelle 6 sowie der bereits erwähnte Zahnradtrieb 8 eine entsprechende Verbindung zwischen der Lüfterwelle 6 und der Kurbelwelle der Brennkraftmaschine 1 her. Wesentlich an der in Figur 2 dargestellten Integration eines zusätzlichen Sternmotors 2 in den Abtriebsstrang einer Brennkraftmaschine 1 ist, dass der Betrieb des Lüfterrades 3 und der als Sternmotor 2 ausgebildeten Expandereinheit unabhängig voneinander erfolgen kann. Hierfür ist zwischen dem Kettentrieb 9 und der Kurbelwelle 4 des Sternmotors 2 eine Kupplung 10 vorgesehen, durch deren Betätigung die Kurbelwelle 4 des Sternmotors 2 und die Lüfterwelle 6 wahlweise koppelbar oder entkoppelbar sind. Auf diese Weise wird insbesondere sichergestellt, dass trotz Vorsehen eines zusätzlichen Dampfkreislaufes mit Sternmotor 2 in jedem Betriebspunkt der Brennkraftmaschine 1 eine zuverlässige Kühlung der Antriebseinheit erfolgt. Außerdem ist auch in dynamischen Betriebsphasen der Brennkraftmaschine 1, beispielsweise bei zügigen Beschleunigungsvorgängen des angetriebenen Fahrzeugs, gewährleistet, dass die Brennkraftmaschine 1 den Sternmotor 2 nicht antreibt, obwohl der zusätzlich vorgesehene Dampfkreislaufs mit dem Sternmotor 2 vergleichsweise träge reagiert.

In Verbindung mit dem in Figur 2 dargestellten Ausführungsbeispiel ist die Kupplung 10 als so genannter Freilauf (auch Überholkupplung genannt) ausgeführt. Der Freilauf verfügt in diesem Fall über Klemmkörper, die sicherstellen, dass die Drehbewegungen der Lüfterwelle 6 und der Kurbelwelle 4 des Sternmotors entkoppelt sind, sobald sich die Lastverhältnisse ändern.

Darüber hinaus ist bei der in Verbindung mit Figur 2 beschriebenen Ausführungsform vorgesehen, den Sternmotor sowohl im Antriebs- als auch im Bremsmodus zu betreiben. Aus diesem Grund ist der Freilauf sperrbar ausgeführt, damit durch die Umsteuerung der Ventile sowohl ein Betrieb im Antriebs- als auch im Bremsmodus ermöglicht werden kann.

Wie bereits eingangs erwähnt, sind die über einen Kettentrieb 9 verbundene Abtriebswelle 4 des Sternmotors 2 und die Lüfterwelle 6 im Kurbelgehäuse 11 des Sternmotors 2 angeordnet. Der Durchtrieb der Lüfterwelle 6 zum Lüfterrad 3 erfolgt hierbei durch das Kurbelgehäuse 11 in einem zwischen zwei Pleuels 12 des Sternmotors 2 befindlichen Bereich. Auf diese Weise wird der Achsabstand zwischen Lüfterwelle 6 und der Kurbelwelle 4 des Sternmotors 2 verhältnismäßig klein gehalten.

Die Einlass- sowie Auslassventile des Sternmotors 2 sind in Form von Sitzventilen ausgeführt, die in geschlossener Stellung eine hohe Dichtheit gewährleisten. Die Betätigung der Einlass- und Auslassventile erfolgt mit Hilfe von Nockenscheiben, die auf der Kurbelwelle 4 des Sternmotors 2 vorgesehen sind.

Bei der beschriebenen Gestaltung eines dampfgetriebenen Sternmotors 2 wird die Lüfterwelle 6 mit einer höheren Drehzahl als die Kurbelwelle der Brennkraftmaschine 1 betrieben. Aufgrund der hohen Betriebsdrehzahl der Lüfterwelle 6 ist es somit ausreichend, den Sternmotor mit einem verhältnismäßig kleinen Hubvolumen auszuführen, da die Kurbelwelle 4 des Sternmotors 2 in einem der Betriebsdrehzahl der Lüfterwelle 6 zumindest ähnlichen Drehzahlbereich betrieben wird.

Darüber hinaus bietet die Anordnung des Sternmotors direkt hinter dem Lüfterrad 3 bzw. zwischen Lüfterrad 3 und Brennkraftmaschine 1 eine sehr Platz sparende Anordnungsmöglichkeit für die zusätzliche Expandereinheit.

Die Zuführung des Dampfes aus der Dampferzeugereinheit (nicht dargestellt) zu den Ventilen erfolgt über Arbeitsmittelleitungen 15, die vorzugsweise als flexible Schläuche ausgeführt sind.

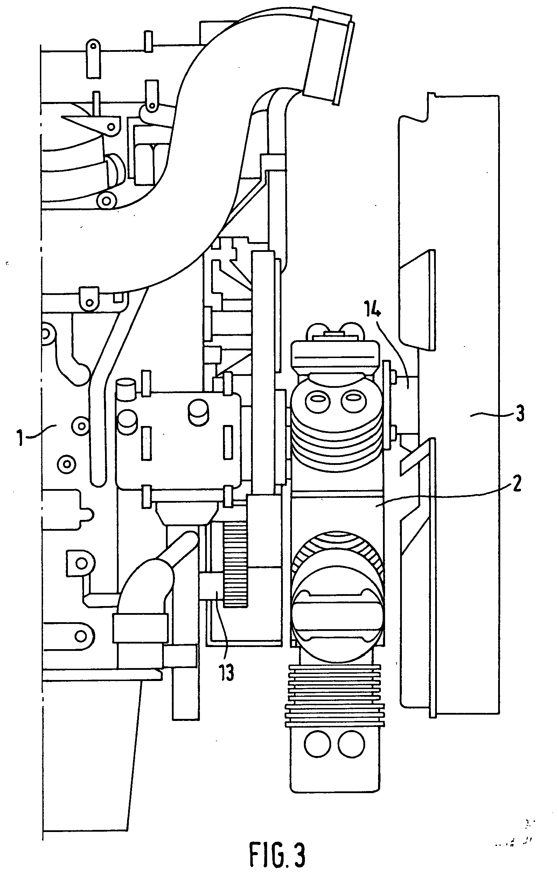

Figur 3 zeigt zunächst den Einbau eines zusätzlich vorgesehenen, dampfgetriebenen Sternmotors 2 an einer Brennkraftmaschine 1. Im Gegensatz zu den in Verbindung mit den Figuren 1 und 2 erläuterten Aufbauten ist die Lüfterwelle 6 hierbei außerhalb des Kurbelgehäuses des Sternmotors angeordnet. Die Lüfterwelle 6 verläuft außerhalb des Kurbelgehäuses zwischen zwei Zylindern des Sternmotors 2 zum Lüfterrad 3 und steht auf der dem Lüfterrad gegenüberliegenden Seite über einen Zahnradtrieb mit der Kurbelwelle der Brennkraftmaschine 1 in Wirkverbindung.

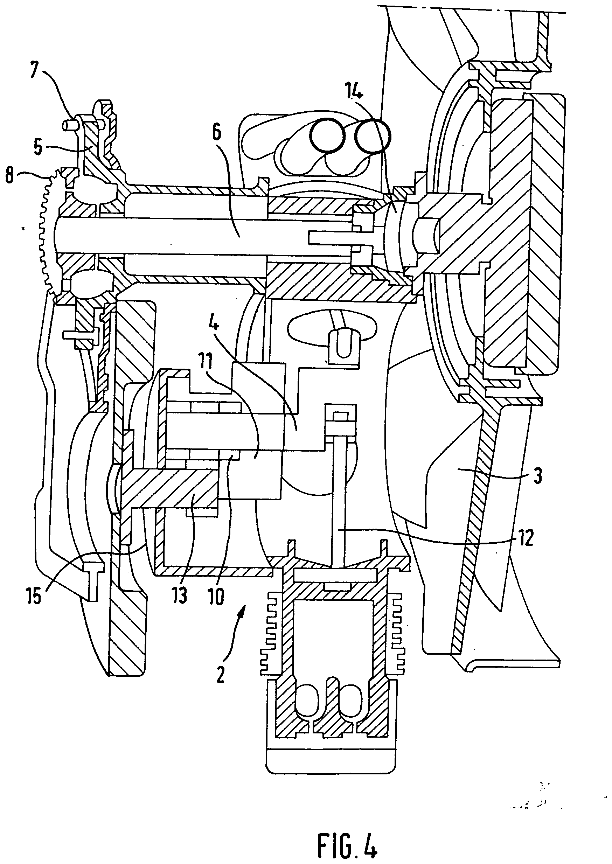

In Figur 4 ist eine Schnittdarstellung des wie in Figur 3 gezeigt eingebauten Sternmotors 2 dargestellt. In diesem Fall ist die Kurbelwelle 4 des Sternmotors 2 über eine Stirnradstufe 13 und eine entsprechende Flanschverbindung mit der Kurbelwelle der Brennkraftmaschine 1 gekoppelt. Je nach Auslegung der für die Stirnradstufe 13 verwendeten Stirnräder kann die Stirnradstufe 13 auch als Übersetzungsstirnradgetriebe ausgeführt werden. Darüber hinaus ist ein Freilauf, der den in Abhängigkeit der Lastverhältnisse variierenden Drehzahlunterschied zwischen der Kurbelwelle 4 des Sternmotors und der Kurbelwelle der Brennkraftmaschine 1 ausgleicht, direkt in die Stirnradstufe 13 integriert.

Die Einlass- und Auslassventile der Zylinder des Sternmotors 2 sind wiederum als Sitzventile ausgeführt, die von auf der Kurbelwelle 4 des Sternmotors 2 angeordneten Nockenscheiben betätigt werden. Die in den Figuren 3 und 4 dargestellte Ausführungsform einer aufgeladenen Brennkraftmaschine mit zusätzlichem Sternmotor bietet den Vorteil, dass durch die außen liegende Lüfterwelle 6 der Sternmotor 2 selbst kleiner ausgeführt werden kann. Ferner kann bei dieser konstruktiven Gestaltung die Lüfterkupplung 14 im Bereich des Lüfterrades 3 zwischen zwei Zylindern des Sternmotors 2 angeflanscht werden. Auf diese Weise wird das Lüfterrad 3 unmittelbar vor dem Sternmotor 2 angeordnet.

### Bezugszeichenliste

- 1: Brennkraftmaschine
- 2: Sternmotor
- 3: Lüfterrad
- 4: Kurbelwelle des Sternmotors
- 5: Sternmotorflansch
- 6: Lüfterwelle
- 7: Ausnehmung
- 8: Zahnradtrieb
- 9: Kettentrieb
- 10: Kupplung
- 11: Kurbelgehäuse des Sternmotors
- 12: Pleuel des Sternmotors
- 13: Stirnradstufe
- 14: Lüfterkupplung
- 15: Arbeitsmittelleitungen

## Patentansprüche

1. Aufgeladene Brennkraftmaschine eines Kraftfahrzeugs, die einen Kühlkreislauf aufweist, in dem ein Arbeitsmittel umgewälzt wird, das zumindest teilweise in einen dampf- oder gasförmigen Aggregatzustand überführt wird, wobei wenigstens eine mit einer Abtriebswelle der Brennkraftmaschine (1) über einen Triebstrang in Wirkverbindung stehende Expandereinheit vorgesehen ist, in der durch eine Umwandlung von in dem zumindest teilweise dampf- oder gasförmigen Arbeitsmittel enthaltener Energie eine Abtriebswelle der Expandereinheit bewegbar ist, **dadurch gekennzeichnet, dass** die Expandereinheit eine als Sternmotor ausgeführte Zweitaktkolbenmaschine (2) ist, die mittelbar oder unmittelbar über den Triebstrang mit der Abtriebswelle der Brennkraftmaschine in Wirkverbindung steht, wobei der Sternmotor (2) in einem zwischen der Brennkraftmaschine (1) und einem Lüfterrad (3) befindlichen Bereich angeordnet ist, und wobei eine Lüfterwelle (6) innerhalb eines Kurbelgehäuses (11) des Sternmotors (2) angeordnet ist.

2. Aufgeladene Brennkraftmaschine nach Anspruch 1, **dadurch gekennzeichnet, dass** die Zweitaktkolbenmaschine (2) innerhalb eines die Brennkraftmaschine (1) umgebenden Gehäuses angeordnet ist.

3. Aufgeladene Brennkraftmaschine nach Anspruch 1 oder 2, **dadurch gekennzeichnet, dass** die Zweitaktkolbenmaschine innerhalb einer Ölwanne der Brennkraftmaschine (1) angeordnet ist.

4. Aufgeladene Brennkraftmaschine nach einem der Ansprüche 1 bis 3, **dadurch gekennzeichnet, dass** die Zweitaktkolbenmaschine (2) außerhalb eines die Brennkraftmaschine (1) umgebenden Gehäuses in einem zwischen der Brennkraftmaschine (1) und einem Lüfterrad (3) befindlichen Bereich angeordnet ist.

5. Aufgeladene Brennkraftmaschine nach einem der Ansprüche 1 bis 4, **dadurch gekennzeichnet, dass** der Triebstrang über eine Kurbelwelle (4) der Zweitaktkolbenmaschine (2) und eine Lüfterwelle (6) verfügt, die miteinander in Wirkverbindung stehen.

6. Aufgeladene Brennkraftmaschine nach einem der Ansprüche 1 bis 5, **dadurch gekennzeichnet, dass** der Triebstrang wenigstens einen Zahnradtrieb (8) aufweist, über den die Zweitaktkolbenmaschine (2) mittelbar oder unmittelbar mit der Abtriebswelle der Brennkraftmaschine (1) in Wirkverbindung steht.

7. Aufgeladene Brennkraftmaschine nach einem der Ansprüche 1 bis 6, **dadurch gekennzeichnet, dass** der Triebstrang wenigstens einen Riemen- oder Kettentrieb (9) aufweist, über den die Zweitaktkolbenmaschine (2) mittelbar oder unmittelbar mit der Abtriebswelle der Brennkraftmaschine (1) in Wirkverbindung steht.

8. Aufgeladene Brennkraftmaschine nach einem der Ansprüche 1 bis 7, **dadurch gekennzeichnet, dass** die Zweitaktkolbenmaschine (2) über wenigstens einen Zylinder mit Einlass- und Auslassventilen verfügt, die derart ausgeführt sind, dass eine Strömungsrichtung des Arbeitsmittels durch den Zylinder umkehrbar ist.

9. Aufgeladene Brennkraftmaschine nach einem der Ansprüche 1 bis 8, **dadurch gekennzeichnet, dass** die Zweitaktkolbenmaschine (2) über wenigstens einen Zylinder mit Einlass- und Auslassventilen verfügt, die über eine Ventilsteuerung ansteuerbar sind.

10. Aufgeladene Brennkraftmaschine nach einem der Ansprüche 1 bis 9, **dadurch gekennzeichnet, dass** die Zweitaktkolbenmaschine (2) über wenigstens einen Zylinder mit Einlass- und Auslassventilen verfügt, die mittels wenigstens einer Nockenwelle, die mit einer als Abtriebswelle der Zweitaktkolbenmaschine (2) ausgeführten Kurbelwelle (4) in Wirkverbindung steht, betätigbar sind.

11. Aufgeladene Brennkraftmaschine nach Anspruch 10, **dadurch gekennzeichnet, dass** die Nockenwelle über wenigstens eine Antriebs- und eine Bremsnocke verfügt.

12. Aufgeladene Brennkraftmaschine nach einem der Ansprüche 1 bis 11, **dadurch gekennzeichnet, dass** der Triebstrang eine als Abtriebswelle (11) der Zweitaktkolbenmaschine (2) ausgeführte Kurbelwelle (4), eine Lüfterwelle (6), einen Kettentrieb (9), der die Kurbelwelle (4) mit der Lüfterwelle (6) verbindet und einen Zahnradtrieb, der die Lüfterwelle (6) mit der Abtriebswelle der Brennkraftmaschine verbindet, aufweist.

13. Aufgeladene Brennkraftmaschine nach einem der Ansprüche 1 bis 12, **dadurch gekennzeichnet, dass** der Triebstrang wenigstens eine Kupplung (10) aufweist.

14. Aufgeladene Brennkraftmaschine nach Anspruch 13, **dadurch gekennzeichnet, dass** die Kupplung (10) als Überholkupplung ausgeführt ist.

## Claims

1. Supercharged internal combustion engine of a motor vehicle, which internal combustion engine has a cooling circuit in which there is circulated a working medium which is changed at least partially into a vaporous or gaseous state of aggregation, wherein at least one expander unit is provided which is operatively connected to an output shaft of the internal combustion engine (1) via a drive train and in which an output shaft of the expander unit can be moved by means of a conversion of energy contained in the at least partially vaporous or gaseous working medium, **characterized in that** the expander unit is a two-stroke piston engine (2) which is designed as a radial engine and which is operatively connected indirectly or directly via the drive train to the output shaft of the internal combustion engine, wherein the radial engine (2) is arranged in a region situated between the internal combustion engine (1) and a fan impeller (3), and wherein a fan shaft (6) is arranged within a crankcase (11) of the radial engine (2).

2. Supercharged internal combustion engine according to Claim 1, **characterized in that** the two-stroke piston engine (2) is arranged within a housing which surrounds the internal combustion engine (1).

3. Supercharged internal combustion engine according to Claim 1 or 2, **characterized in that** the two-stroke piston engine is arranged within an oil sump of the internal combustion engine (1).

4. Supercharged internal combustion engine according to any of Claims 1 to 3, **characterized in that** the two-stroke piston engine (2) is arranged outside a housing which surrounds the internal combustion engine (1), in a region situated between the internal combustion engine (1) and a fan impeller (3).

5. Supercharged internal combustion engine according to any of Claims 1 to 4, **characterized in that** the drive train has a crankshaft (4) of the two-stroke piston engine (2) and a fan shaft (6), which are operatively connected to one another.

6. Supercharged internal combustion engine according to any of Claims 1 to 5, **characterized in that** the drive train has at least one gear train (8) via which the two-stroke piston engine (2) is operatively connected indirectly or directly to the output shaft of the internal combustion engine (1).

7. Supercharged internal combustion engine according to any of Claims 1 to 6, **characterized in that** the drive train has at least one belt or chain drive (9) via which the two-stroke piston engine (2) is operatively connected indirectly or directly to the output shaft of the internal combustion engine (1).

8. Supercharged internal combustion engine according to any of Claims 1 to 7, **characterized in that** the two-stroke piston engine (2) has at least one cylinder with inlet and outlet valves which are designed such that a flow direction of the working medium through the cylinder is reversible.

9. Supercharged internal combustion engine according to any of Claims 1 to 8, **characterized in that** the two-stroke piston engine (2) has at least one cylinder with inlet and outlet valves which are activatable by means of a valve controller.

10. Supercharged internal combustion engine according to any of Claims 1 to 9, **characterized in that** the two-stroke piston engine (2) has at least one cylinder with inlet and outlet valves which are activatable by means of at least one camshaft which is operatively connected to a crankshaft (4) designed as output shaft of the two-stroke piston engine (2).

11. Supercharged internal combustion engine according to Claim 10, **characterized in that** the camshaft has at least one drive cam and one braking cam.

12. Supercharged internal combustion engine according to any of Claims 1 to 11, **characterized in that** the drive train has a crankshaft (4) designed as output shaft (11) of the two-stroke piston engine (2), a fan shaft (6), a chain drive (9), which connects the crankshaft (4) to the fan shaft (6), and a gear train which connects the fan shaft (6) to the output shaft of the internal combustion engine.

13. Supercharged internal combustion engine according to any of Claims 1 to 12, **characterized in that** the drive train has at least one clutch (10).

14. Supercharged internal combustion engine according to Claim 13, **characterized in that** the clutch (10) is designed as an overrunning clutch.

## Revendications

1. Moteur à combustion interne suralimenté d'un véhicule à moteur, possédant un circuit de refroidissement, à l'intérieur duquel une substance active est mise en circulation, laquelle est au moins partiellement transformée dans un état vaporisé ou gazeux, dans lequel est prévue au moins une unité d'expansion raccordée de manière opérante par une ligne d'entraînement à un arbre de sortie du moteur à combustion interne (1), où un arbre de sortie de l'unité d'expansion peut être mû par une conversion de l'énergie contenue dans la substance active au moins partiellement vaporisée ou gazeuse, **caractérisé en ce que** l'unité d'expansion est un moteur à piston deux temps (2) réalisé comme moteur en étoile, raccordé de manière opérante directement ou indirectement à l'arbre de sortie du moteur à combustion interne par la ligne d'entraînement, dans lequel le moteur en étoile (2) est agencé dans une zone se trouvant entre le moteur à combustion interne (1) et une hélice de ventilateur (3), et dans lequel un arbre de ventilateur (6) est agencé à l'intérieur d'un carter (11) du moteur en étoile (2).

2. Moteur à combustion interne suralimenté selon la revendication 1, **caractérisé en ce que** le moteur à piston deux temps (2) est agencé à l'intérieur d'un boîtier entourant le moteur à combustion interne (1).

3. Moteur à combustion interne suralimenté selon la revendication 1 ou 2, **caractérisé en ce que** le moteur à piston deux temps est agencé à l'intérieur d'un carter d'huile du moteur à combustion interne (1).

4. Moteur à combustion interne suralimenté selon l'une des revendications 1 à 3, **caractérisé en ce que** le moteur à piston deux temps (2) est agencé à l'extérieur d'un boîtier entourant le moteur à combustion interne (1) dans une zone se trouvant entre le moteur à combustion interne (1) et une hélice de ventilateur (3).

5. Moteur à combustion interne suralimenté selon l'une des revendications 1 à 4, **caractérisé en ce que** la ligne d'entraînement dispose d'un vilebrequin (4) du moteur à piston deux temps (2) et d'un arbre de ventilateur (6), raccordés l'un à l'autre de manière opérante.

6. Moteur à combustion interne suralimenté selon l'une des revendications 1 à 5, **caractérisé en ce que** la ligne d'entraînement comporte au moins un entraînement par engrenage (8), par lequel le moteur à piston deux temps (2) est raccordé de manière opérante directement ou indirectement à l'arbre de sortie du moteur à combustion interne (1).

7. Moteur à combustion interne suralimenté selon l'une des revendications 1 à 6, **caractérisé en ce que** la ligne d'entraînement comporte au moins un entraînement par courroie ou par chaîne (9), par lequel le moteur à piston deux temps (2) est raccordé de manière opérante directement ou indirectement à l'arbre de sortie du moteur à combustion interne (1).

8. Moteur à combustion interne suralimenté selon l'une des revendications 1 à 7, **caractérisé en ce que** le moteur à piston deux temps (2) dispose d'au moins un cylindre doté de soupapes d'admission et d'échappement, réalisées de telle sorte qu'une direction de flux de la substance active à travers le cylindre est inversable.

9. Moteur à combustion interne suralimenté selon l'une des revendications 1 à 8, **caractérisé en ce que** le moteur à piston deux temps (2) dispose d'au moins un cylindre doté de soupapes d'admission et d'échappement, lesquelles sont commandables par une commande de soupapes.

10. Moteur à combustion interne suralimenté selon l'une des revendications 1 à 9, **caractérisé en ce que** le moteur à piston deux temps (2) dispose d'au moins un cylindre doté de soupapes d'admission et d'échappement, lesquelles sont actionnables au moyen d'au moins un arbre à cames, raccordé de manière opérante à un vilebrequin (4) réalisé comme arbre de sortie du moteur à piston deux temps (2).

11. Moteur à combustion interne suralimenté selon la revendication 10, **caractérisé en ce que** l'arbre à cales dispose d'au moins une came de commande et une came de frein.

12. Moteur à combustion interne suralimenté selon l'une des revendications 1 à 11, **caractérisé en ce que** la ligne d'entraînement comporte un vilebrequin (4) réalisé comme arbre de sortie (11) du moteur à piston deux temps (2), un arbre de ventilateur (6), un entraînement par chaîne (9) reliant le vilebrequin (4) à l'arbre de ventilateur (6) et un entraînement par engrenage reliant l'arbre de ventilateur (6) à l'arbre de sortie du moteur à combustion interne.

13. Moteur à combustion interne suralimenté selon l'une des revendications 1 à 12, **caractérisé en ce que** la ligne d'entraînement comporte au moins un embrayage (10).

14. Moteur à combustion interne suralimenté selon la revendication 13, **caractérisée en ce que** l'embrayage (10) est réalisé comme embrayage à roue libre.
